# EUROPEAN PATENT APPLICATION

(11) **EP 1 722 313 A2**
(43) Date of publication of application: **15.11.2006**
(21) Application number: 06113616.4
(22) Date of filing: 08.05.2006
(51) Int. Cl.: G06F 21/22

(54) **Method for creating unique identification for copies of executable code and management thereof**

(30) Priority: 12.05.2005 US 127674
(71) Applicant: Xerox Corporation, Rochester, New York 14644 (US)
(72) Inventor: Vernon, Bradley E, Pittsford, NY 14534 (US)
(74) Representative: Skone James, Robert Edmund

(57) **Abstract**

A method electronically modifies a compiled executable file, the compiled executable file including a plurality of data elements by compiling source code to created a compiled executable file having a first data structure corresponding to the source code such that the first data structure is realized each time the source code is compiled; rearranging (S810) locations of a predetermined number of data elements within the first compiled executable file to create a compiled executable file having a second data structure; and editing (S830) address data within the compiled executable file in accordance with the rearranged locations to generate a compiled executable file having a unique second data structure that functions a same way as a compiled executable file having a first data structure. This unique second data structure creates an essentially indelible mark on the software file while maintaining its functionality. The unique second data structure corresponds to a specific copy of the executable code, thereby enabling the determination of the executable code's origins.

## Description

Software piracy is a significant problem. It is very difficult to prevent people from illegally copying software and other similar electronic files. One part of the problem is the difficulty in uniquely identifying a specific copy of the software or electronic file. Described herein is a method to uniquely identify a copy of a software file in a nearly indelible fashion.

When software is sold it may be distributed via CD-ROM (or similar disk based technology) or electronic file download. CD-ROM may be used when there is a mass produced product such as an operating system or major application. An electronic file download may be used to distribute updates or patches. In some cases, entire applications may be distributed via electronic download.

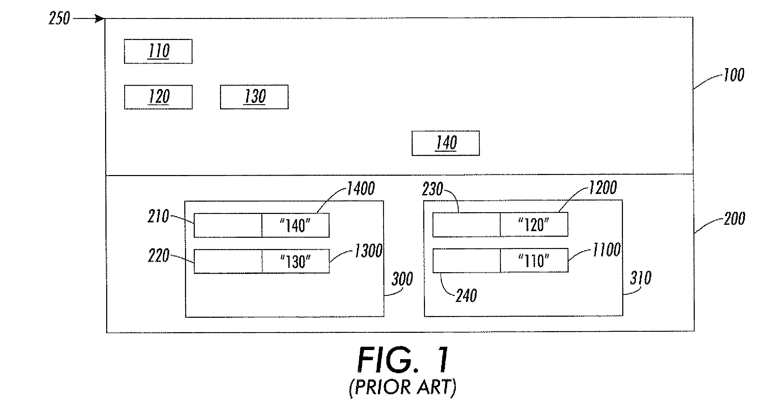

When software code is prepared, or compiled, into a form that can be executed on a digital computer, it is translated into an executable software file. An example of an executable software file is shown in Figure 1.

As illustrated in Figure 1, a conventional executable software file that contains a data section 100 and a code section 200. The data section 100 includes data locations 110, 120, 130, and 140. The data locations 110, 120, 130, and 140 can be referred to by instructions 210, 220, 230, and 240 in the code section 200.

Conventionally, the code section 200 also includes subroutines 300 and 310. The subroutines 300 and 310 in the code section 200 are composed of instructions 210, 220, 230, and 240 that can refer to address locations through operands 1100, 1200, 1300, and 1400, respectively, in order to perform an operation upon the data located at the addresses stored within operands 1100, 1200, 1300, and 1400. More specifically, as illustrated in Figure 1, operands 1100, 1200, 1300, and 1400 store the address values for data locations 110, 120, 130, and 140, respectively. The instructions 210, 220, 230, and 240 can also refer to the starting addresses of other subroutines in order to cause those subroutines to be executed.

Conventionally, each element of the software file is at a particular location within that software file. This is symbolized in Figure 1 by showing each of the above-described elements in a different position. The relative position of each item to the other items within the software file in an executable software file remains the same after it is loaded into the memory of a digital computer for execution. The addresses 110, 120, 130, and 140 each represent only one location, while the subroutines 300 and 310 encompass more than one contiguous location.

The first entry point 250 of a conventional executable software file is the location of the first instruction to be executed when the digital computer begins executing the instructions of the executable software file. This first entry point 250 is conventionally the first location or near the first location of the executable software file.

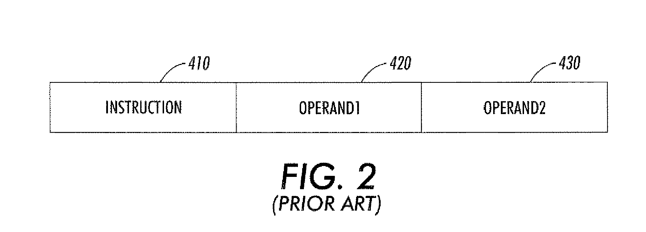

With reference now to Figure 2, an instruction 410 is followed by at least one operand. In Figure 2, two operands 420 and 430 are shown. The number of operands conventionally varies depending on the identity of the instruction that precedes the operand.

Referring back to Figure 1, when a software file is executed, the instructions are executed starting with the instruction located in the first entry point 250. This instruction may contain a "jump" instruction, which will cause the next instruction to be read from a location that is not adjacent to the "jump" instruction. Although Figure 1 illustrates an executable software file divided into a data section 100 and a code section 200, the subroutines 300 and 310 and address locations 110, 120, 130, and 140 can reside anywhere in the executable software file and can be intermingled. However, each individual subroutine 300 and 310, since it encompasses more than one contiguous location, cannot be split up and must remain intact.

Referring again to Figure 2, the operands 420 and 430 of an instruction 410 may contain data or may contain an address location in a conventional executable software file. The addresses in the operands 420 and 430 of an executable software file are relative to positions in the executable software file only. The addresses in the operands 420 and 430 are not relative to physical locations in the memory of a digital computer until the executable software file is loaded into the memory thereof.

At the time a conventional executable software file is loaded into memory, the digital computer must perform an operation known as "link editing." In other words, every location in the executable software file that contains a reference to another location in the executable software file must be modified to refer to a physical location in the memory of the digital computer that is executing the software file.

With reference to Figure 1, a conventional "Link Editing" program in the digital computer determines the physical starting address of the first entry point 250. That same "Link Editing" program also increments all the address references in the executable software file by that displacement. For example, if the conventional "Link Editing" program in the digital computer determines the physical starting address of the first entry point 250 to be the physical starting address having a value "400," all the values in operands 1100, 1200, 1300, and 1400 would also be incremented by "400" if these operands contain an address reference.

A program in the digital computer that performs "Link Editing" can determine which locations contain an address by following the execution paths of the instructions in the executable software file, starting with the instruction in the first entry point 250. As noted above, the only places in the executable software file that can contain address references are the operands of the instructions. The identity of an instruction determines which operands, if any, must be address references.

The execution paths of the instructions in the executable software file can be determined by a program that performs "Link Editing" because the next instruction to be executed is either located after the operands of the current instruction or is located in the relative address referred to by one of the operands of the current instruction. Conventional link edit methods can also follow execution paths that are based on a condition; the details of such algorithms will not be discussed here. A properly functioning link edit program is required in order for a digital computer to successfully load and execute an executable software file.

Utilizing the concepts described above, it is possible to create executable files that are identical or have the information within specific predetermined locations varied. By varying the information within specific predetermined locations, a distributor of the software is able to embed a serial number or other piece of information (key) into the executable file that must be entered by the user to enable the software.

Since the above-noted variations are constrained to specific predetermined locations, a software pirate can readily ascertain the specific predetermined locations, and thus, the software pirate is able to easily obscure the information associated with specific predetermined locations to obliterate the serial number or to inhibit the operation of any copy protection built into the application, With the serial number area obliterated, it is impossible to determine how the software was illegally obtained.

Therefore, it is desirable to provide a method to enable the identification of the source of the software copy. Moreover, it is desirable to provide a method to enable the identification of the source of software copy that is difficult to obscure or obliterate.

In accordance with the present invention, a method for electronically modifying a compiled executable file, the compiled executable file including a plurality of data elements comprises:
(a) compiling source code to create a compiled executable file having a first data structure corresponding to the source code such that the first data structure is realized each time the source code is compiled;
(b) rearranging locations of a predetermined number of data elements within the compiled executable file to create a compiled file having a second data structure, the second data structure being different from the first data structure; and
(c) editing address data within the compiled file having the second data structure in accordance with the rearranged locations to generate a compiled executable file having a second data structure that functions in a same way as the compiled executable file having the first data structure.

As noted above, when software code is prepared, or compiled, into a form where it can be executed on a digital computer, it is translated into an executable software file containing a data section and a code section. The data section includes address locations wherein the address locations can be referred to by instructions in the code section in order to perform operations on the data contained at the addresses.

As also noted above, conventionally, each element of the executable software file is at a particular location within that software file. The relative position of each item, with respect to the other items within the software file in an executable software file, remains the same after it is compiled.

More specifically, programs that have been conventionally compiled into an executable software file have a byte sequence that is defined and does not vary under conventional circumstances. The program may be written in a programming language and may include variables, data elements, and/or instructions. A compiler converts the program into a static executable software file having a loadable format; static meaning that the byte sequence is defined and non-variable, and loadable format meaning that the executable software file is in a format that facilitates a loading into memory for execution. After the program is compiled into a static loadable formatted executable software file, this file can be written onto a CD-RUM for proper distribution or sent out electronically for proper distribution.

The static loadable formatted executable software file is used by the "link edit" program of a digital computer when the file is loaded into memory for execution by the digital computer, as previously discussed. The loadable format may vary from operating system to operating system, and potentially from programming language to programming language. The static loadable formatted executable software file provides a way to specify the machine instructions that are to be executed, and a way to locate (in memory) the variables and subroutines that constitute the program.

As noted above, it is desirable to provide a method for producing a way to enable the identification of the source of software copy and/or make it difficult to obscure or obliterate the identification of the source of software copy. Such a method creates a unique arrangement of the actual data structure of each static loadable formatted executable software file. In other words, the locations of the various elements within the static loadable formatted executable software file create a unique landscape that identifies the source of the software copy. Moreover, this unique data structure-based signature is difficult to change without destroying the functionality of the static loadable formatted executable software file.

To better explain the producing of a unique arrangement of the data structure for a software file to enable the identification of the source of software copy and/or making it difficult to obscure or obliterate the identification of the source of software copy, the following simple program will be utilized:

Compiling and executing the simple program, as provided above, will always result in the variable, Message3, having the value "Hello World" because the data structure of the loadable formatted executable software file is static. However, if the locations of Message 1 and Message2 were to be reversed during compilation by either providing the source code associated with Message1 and Message2 to the compiler in a different order or by rearranging the machine code after or during compilation, a different but functionally identical executable software file would be created.

More specifically, if the compiler had received Message1 and Message2 in reverse order, the data structure of the loadable formatted executable software file would be different from the original structure in that the original data associated with Message1 would be located at the original address location of Message2 and the original data associated with Message2 would be located at the original address location of Message1. In such a situation, the newly compiled program would output "World Hello" because the address locations of Message1 and Message2 have been reversed by the compiler. Moreover, if the machine code associated with Message1 and Message2 had changed locations during or after compilation, the newly compiled program would output "World Hello."

It is noted that an analysis of the created loadable formatted executable software file can reveal the address locations for the data associated with Message1 and Message2. In other words, the created loadable formatted executable software file having the data associated with Message1 and Message2 at their first locations would have an executable software file data structure that is different from the created loadable formatted executable software file having the data associated with Message1 and Message2 at their reversed locations. Thus, unique executable software file data structures can be created by re-arranging the locations of the different elements within an executable software file before, during, or after compilation. This unique executable software file data structure can provide a unique identification tag for the executable software file.

Unique executable software file data structures can be created by re-arranging the locations of the different elements within an executable software file before, during, or after compilation. However, if this is done after compilation, the output or functionality would be corrupted if left as is. The corruption from the re-arranging of the locations of the different elements within an executable software file after compilation, can be resolved by tracking all of the changes and then editing the original data associated with identifying the re-arranged locations within the loadable formatted executable software file to reflect the new locations created. In other words, the locations of the various elements within the loadable formatted executable software file can be re-arranged without detrimentally impacting functionality if the location changes are tracked and the original data associated with identifying the re-arranged locations (address values) are updated to reflect the changes in the loadable formatted executable software file data structure.

It is noted that the changing of the locations can be governed by a random algorithm or a predetermined algorithm that would generate a predetermined desired number of unique loadable formatted executable software file data structures.

The data element may be a data location in the compiled executable file, a byte of data in the compiled executable file, and/or a subroutine in the compiled executable file. The locations of a predetermined number of data elements within the compiled executable file having the first data structure may be randomly rearranged and/or rearranged using a predetermined algorithm that generates a predetermined number of unique data structures. Each copy of a compiled executable file from a same source code has locations of a predetermined number of data elements within the compiled executable file having the first data structure rearranged to create a compiled file having a non-first data structure and the address data within the compiled file is edited in accordance with the rearranged locations.

In another aspect, a method electronically modifies a compiled executable file, the compiled executable file including a plurality of data elements by rearranging locations of a predetermined number of data elements, during compilation of source code to created a compiled file having a second data structure, a first data structure being realized when compiling a same source code without rearranging the locations of a predetermined number of data elements, the first data structure being realized each time the source code is compiled without rearrangement, the second data structure being different from the first data structure; and editing address data within the compiled file in accordance with the rearranged locations to generate a compiled executable file having a second data structure that functions in a same way as a compiled executable file having a first data structure.

The data element may be a data location in the compiled executable file, a byte of data in the compiled executable file, and/or a subroutine in the compiled executable file. The locations of a predetermined number of data elements within the compiled executable file having the first data structure may be randomly rearranged and/or rearranged using a predetermined algorithm that generates a predetermined number of unique data structures. The unique value is generated by executing a check sum routine upon the compiled executable file having a second data structure. Each copy of a compiled executable file from a same source code has locations of a predetermined number of data elements within the compiled executable file having the first data structure rearranged to create a compiled file having a non-first data structure and the address data within the compiled file is edited in accordance with the rearranged locations. The unique asset code may be a serial number, information representing a licensee of the compiled executable file, information representing a purchaser of the compiled executable file, and/or information representing a recipient of the compiled executable file.

In a further aspect, a method electronically modifies a data structure of a compiled executable file, the compiled executable file including a plurality of data elements by rearranging locations of text strings within a source code prior to compilation; and compiling the rearranged source code to created a compiled executable file having a second data structure, a first data structure being realized when compiling a same source code without rearranging the locations of the text strings within a source code, the first data structure being realized each time the source code is compiled without rearrangement.

The text string may be a data location in the compiled executable file, a byte of data in the compiled executable file, and/or a subroutine in the compiled executable file. The locations of text strings within a source code may be randomly rearranged and/or rearranged using a predetermined algorithm that generates a predetermined number of unique data structures.

Further, a method may create compiled executable files, each having a unique identification value by compiling source code to created a compiled executable file having a first data structure corresponding to the source code such that the first data structure is realized each time the source code is compiled; rearrange locations of a predetermined number of data elements within the compiled executable file to create a compiled executable file having a second data structure, the second data structure being different from the first data structure; edit address data within the compiled file in accordance with the rearranged locations to generate a compiled executable file having a second data structure that functions in a same way as the compiled executable file having the first data structure; and create a unique value representing the data structure of the compiled executable file having a second data structure, the unique value providing a unique identification for the compiled executable file having a second data structure.

The method may create and record a unique identification value for each copy of a compiled executable file by compiling source code to created a compiled executable file having a first data structure corresponding to the source code such that the first data structure is realized each time the source code is compiled; rearranging locations of a predetermined number of data elements within the compiled executable file having the first data structure to create a compiled file having a second data structure, the second data structure being different from the first data structure; editing address data within the compiled file in accordance with the rearranged locations to generate a compiled executable file having a second data structure that functions in a same way as the compiled executable file having the first data structure; creating a unique value representing each unique data structure of the compiled executable file having a non-first data structure, the unique value providing a unique identification for each compiled executable file having a unique non-first data structure; assigning a unique asset code to each compiled executable file having a unique non-first data structure; recording the compiled executable file having a unique non-first data structure onto a recording medium; and storing the unique value associated with the compiled executable file having a unique non-first data structure and the unique asset code associated with the compiled executable file having a unique non-first data structure in a related manner.

We also provide set of data carriers, each carrying data elements defining the same executable file, the arrangements of data elements on each data carrier being different from the arrangement on all other data carriers in the set.

Typically, each member of the set has been produced by a method according to the invention.

Some examples of methods according to the invention will now be described with reference to the accompanying drawings, in which:-
Figure 1 graphically illustrates a structural layout of a conventional software file;
Figure 2 graphically illustrates a structural layout of a conventional machine code instruction;
Figure 3 graphically illustrates the concept of re-ordering the content of a software file;
Figure 4 is a flowchart illustrating a method of mapping a licensee to a software copy;
Figure 5 is a flowchart illustrating the creation of a loadable formatted executable software file for distribution, each loadable formatted executable software file having a unique data structure;
Figure 6 is a flowchart illustrating the creation of a loadable formatted executable software file for distribution, each loadable formatted executable software file having a unique data structure; and
Figure 7 is a flowchart illustrating the creation of a loadable formatted executable software file for distribution, each loadable formatted executable software file having a unique data structure.

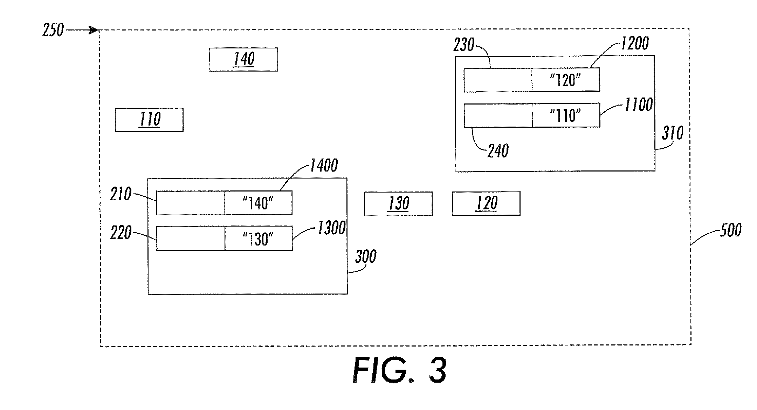

An example of an executable software file data structure constructed by re-arranging the elements within a loadable formatted executable software file is illustrated by Figure 3. In the following explanation, it is assumed that Figure 1 illustrates the executable software file data structure from conventional compiling.

As illustrated in Figure 3, subroutines 300 and 310 and data 110, 120, 130, and 140 have been re-arranged within the executable software file after compilation. The data locations 110, 120, 130, and 140 can be referred to by instructions 210, 220, 230, and 240 in the subroutines 300 and 310. As noted before, the subroutines 300 and 310 are composed of instructions 210, 220, 230, and 240 that can refer to address locations through operands 1100, 1200, 1300, and 1400, respectively, in order to perform an operation upon the data located at the addresses stored within operands 1100, 1200, 1300, and 1400. More specifically, as illustrated in Figure 3, operands 1100, 1200, 1300, and 1400 store the address values for data locations 110, 120, 130, and 140, respectively. The instructions 210, 220, 230, and 240 can also refer to the starting addresses of other subroutines in order to cause those subroutines to be executed.

Each element of the software file of Figure 3 is at a particular location within that software file that is different from the locations shown in Figure 1 although the software files of Figures 1 and 3 represent executable files with identical functionality. As with Figure 1, the relative position of each item, in Figure 3, to the other items within the software file in an executable software file remains the same after it is loaded into the memory of a digital computer for execution. The addresses 110, 120, 130, and 140 each represent only one location, while the subroutines 300 and 310 encompass more than one contiguous location. It is noted that subroutines 300 and 310 are not split up, but remain intact.

Thus, as illustrated in Figures 1 and 3, the executable software file data structures are different and unique.

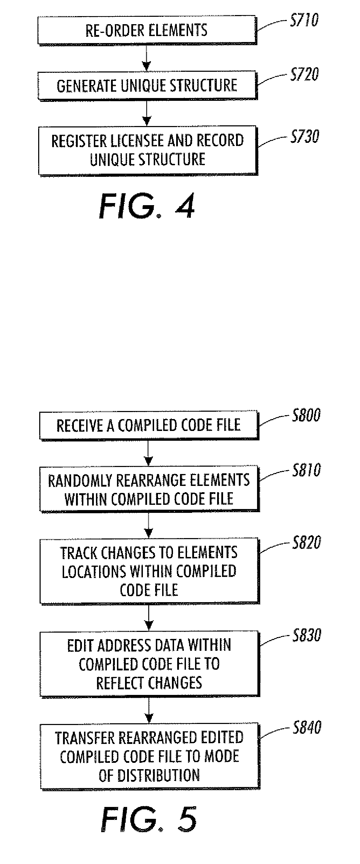

Figures 5-7 will be utilized to provide a more comprehensive understanding as to how these unique executable software file data structures are realized.

Figure 5 is a flowchart illustrating the rearranging of compiled machine code to generate the same corresponding executable software files, but with each one having a unique data structure. Initially, as illustrated in Figure 5, a file of compiled machine code is received at S800. The various elements within the file of compiled machine code are rearranged at S810. It is noted that the rearranging or changing of the locations of the elements can be governed by a random algorithm or a predetermined algorithm that would generate a predetermined desired number of unique loadable formatted executable software file data structures.

The rearranging of the various elements within the file of compiled machine code is tracked at S820 so that a record of where each element now is located is known. This tracked information is utilized to edit the address data within the compiled machine code to reflect the tracked changes at S830.

For example, if data location was originally destined to be located at address "500" after compilation, but was moved to address "750" after the elements were rearranged, the original address data equal to "500" within the compiled would be edited to reflect the new location "750." Thus, by tracking the changes, the compiled machine code can be edited to provide correct address data corresponding to the new locations of various rearranged elements.

Once the complied machine code is edited to provide correct address data corresponding to the new locations of various rearranged elements, the rearranged edited compiled code, at S840, is ready for distribution by a physical medium, such as a CD-ROM, or a communication medium, such as a network.

Utilizing this methodology, a distributor can generate a multitude of copies of a software program, each functioning identically, but each having a unique, underlying, data structure. This unique data structure can be utilized to provide distinct and unique identification information for each copy of the software.

Upon creating a unique executable software file data structure, a check sum generation routine or other algorithm can be performed upon the unique data structure executable software file to create a unique value representing that executable software file. To ensure a true randomness, these unique values can be compared with past created values to ensure that the created executable software file data structure is definitely unique.

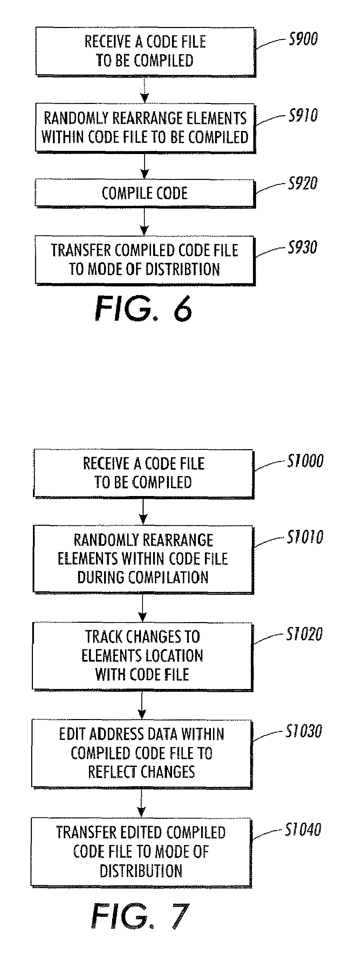

Figure 6 is a flowchart illustrating the rearranging of source code, prior to compilation, to generate corresponding executable software files, but with each one having a unique data structure. Initially, as illustrated in Figure 6, a file of source code to be compiled is received at S900. The various elements, text strings, within the file of source code to be compiled are rearranged at S910. It is noted that the rearranging or changing of the locations of the elements can be governed by a random algorithm or a predetermined algorithm that would generate a predetermined desired number of unique loadable formatted executable software file data structures.

The compiled code is then ready, at S930, for distribution by a physical medium, such as a CD-ROM, or a communication medium, such as a network.

Utilizing this methodology, a distributor can generate a multitude of copies of a software program, each functioning identically, but each having a unique, underlying, data structure. This unique data structure can be utilized to provide distinct and unique identification information for each copy of the software.

Figure 7 is a flowchart illustrating the rearranging of the various elements within the file of compiled machine code, during compilation, to generate the same corresponding executable software files, but with each one having a unique data structure. Initially, as illustrated in Figure 7, a file of source code to be compiled is received at S1000. The source code is compiled, and during compilation, various elements within the file of compiled machine code are rearranged at S1010. It is noted that the rearranging or changing of the locations of the elements can be governed by a random algorithm or a predetermined algorithm that would generate a predetermined desired number of unique loadable formatted executable software file data structures.

The rearranging of the various elements within the file of compiled machine code is tracked at S1020 so that a record of where each element now is located is known. This tracked information is utilized to edit the address data within the compiled machine code to reflect the tracked changes at S1030.

For example, if data location was originally destined to be located at address "500" after compilation, but was moved to address "750" during compilation, the original address data equal to "500" within the compiled would be edited to reflect the new location "750." Thus, by tracking the changes, the compiled machine code can be edited to provide correct address data corresponding to the new locations of various rearranged elements.

Once the complied machine code is edited to provide correct address data corresponding to the new locations of various rearranged elements, the rearranged edited compiled code, at S1040, is ready for distribution by a physical medium, such as a CD-ROM, or a communication medium, such as a network.

Utilizing this methodology, a distributor can generate a multitude of copies of a software program, each functioning identically, but each having a unique, underlying, data structure. This unique data structure can be utilized to provide distinct and unique identification information for each copy of the software.

Utilizing the unique data structure generation routines described above, a distributor can more easily identify the source of a pirated copy of software. For example, as illustrated in Figure 4, a unique data structure executable software file is created by a rearrangement routine at S710. At S720, a unique value is generated based upon the unique data structure of the executable software file.

As noted above, the unique data structure provides a basis for the generation of a unique identification for that copy of the executable software. One example is the utilization of a check sum generator that generates a check sum value for that copy of executable software wherein the check sum generation is based upon the data structure.

All the locations in the executable software file contain an instruction, an address reference, or a data element. All of these types of content are in binary numeric form. Thus, it possible for any ordering of elements in an executable software file to be represented by a check sum which would be the sum of all the contents of all the locations. Depending on the contents of an executable software file, each unique ordering of the contents of an executable software file may also have a unique check sum.

It is noted that the number of possible different check sums will also increase as the number of data elements and subroutines increases. Thus, the association of a check sum with a unique arrangement of contents can be used to associate original licensees with their copies of the software.

It is noted that other ways of representing an ordering of elements in an executable software file, beside a check sum may be used.

At S730, when a distributor goes to license or sell a copy of the executable software, the distributor can register the licensee or buyer and identify the transferred software by recording its unique identifying value generated based upon the unique data structure of the executable software file.

For example, a distributor may generate a thousand CD-ROMs, each having the same executable software file, "A," thereon, but wherein the executable software file, "A," on each CD-ROM has a different data structure and each CD-ROM has a different serial number or ID. From the data structure, the distributor enters into a database, the unique value generated based upon the unique data structure of the executable software file and the associated serial number of the CD-ROM. When the CD-ROM is distributed, the distributor can then enter into the database the information associated with the entity receiving the CD-ROM.

Thereafter, if the distributor finds an alleged pirated version of the software, the distributor merely needs to analyze the data structure of the executable code to determine its unique value and compare it with the value in the database to determine if it is pirated, and if pirated, the source of the original copy that was pirated.

The methods disclosed herein are methods whereby re-ordering of the content of an executable software file is performed without altering in any way the functionality of the executable software.

It is noted that the subroutines will still contain the same set of instructions in the same order.

As noted above, if the location of a data address is moved, then every operand in the executable software file that refers to that address must also be changed. Similarly, it is noted that if the location of a subroutine is changed, then every operand in the executable software file that refers to that subroutine must also be changed.

It is noted that the greater the number of movable elements in the executable software file, the greater the number of possible unique data structures. It is noted that, as the number of movable elements in the executable software file is increased, the number of possible ways to sequence the variables may increase exponentially. Lastly, it is noted that the various routines described above may be implemented on any digital processing device. The various routines described above may be also implemented in firmware or directly in hardware.

## Claims

1. A method for electronically modifying a compiled executable file, the compiled executable file including a plurality of data elements, comprising:
(a) compiling source code to create a compiled executable file having a first data structure corresponding to the source code such that the first data structure is realized each time the source code is compiled;
(b) rearranging locations of a predetermined number of data elements within the compiled executable file to create a compiled file having a second data structure, the second data structure being different from the first data structure; and
(c) editing address data within the compiled file having the second data structure in accordance with the rearranged locations to generate a compiled executable file having a second data structure that functions in a same way as the compiled executable file having the first data structure.

2. The method as claimed in claim 1, wherein each data element is one of a data location in the compiled executable file, a byte of data in the compiled executable file, and a subroutine in the compiled executable file.

3. The method as claimed in claim 1 or claim 2, wherein the locations of a predetermined number of data elements within the compiled executable file having the first data structure are randomly rearranged.

4. The method as claimed in any of the preceding claims, wherein the locations of a predetermined number of data elements within the compiled executable file having the first data structure are rearranged using a predetermined algorithm that generates a predetermined number of unique data structures.

5. A method for electronically modifying a data structure of a compiled executable file, the compiled executable file including a plurality of data elements, comprising:
(a) rearranging locations of text strings within a source code prior to compilation; and
(b) compiling the rearranged source code to created a compiled executable file having a second data structure, a first data structure being realized when compiling a same source code without rearranging the locations of the text strings within a source code, the first data structure being realized each time the source code is compiled without rearrangement.

6. The method as claimed in claim 5, wherein each text string is one of a data location in the compiled executable file, a byte of data in the compiled executable file, and a subroutine in the compiled executable file.

7. The method as claimed in claim 5 or claim 6, wherein the locations of text strings within a source code are randomly rearranged.

8. The method as claimed in claim 5 or claim 6, wherein the locations of text strings within a source code are rearranged using a predetermined algorithm that generates a predetermined number of unique data structures.

9. A computer program product comprising code which when implemented on a processor causes the processor to carry out a method according to any of the preceding claims.

10. A set of data carriers, each carrying data elements defining the same executable file, the arrangements of data elements on each data carrier being different from the arrangement on all other data carriers in the set.
